# EUROPEAN PATENT SPECIFICATION

(11) **EP 1 676 790 B1**
(45) Date of publication and mention of the grant of the patent: **23.07.2008**
(21) Application number: 06000105.4
(22) Date of filing: 04.01.2006
(51) Int. Cl.: B65D 81/26, A23L 3/3436

(54) **Oxygen scavenger with oxygen level indication**
Sauerstoffaufnehmer und -niveauanzeiger
Absorbeur d'oxygène avec indicateur de niveau d'oxygène

(30) Priority: 04.01.2005 CN 200520069606; 11.05.2005 CN 200520071512
(43) Date of publication of application: 05.07.2006
(73) Proprietor: Yang, Yuanmei, Nanjing 210007 (CN); Jaw, Wen-Sheng, Taichung (TW)
(72) Inventor: Yang, Wenyuan, Nanjing, 210007 (CN); Yang, Yuanmei, Nanjing, 210007 (CN); Li, Xiuzhi, Nanjing, 210007 (CN)
(74) Representative: Weiss, Peter

(56) References cited:
- EP-A- 0 524 021
- WO-A-96/11861
- WO-A-20/04094262
- US-A- 4 856 649
- US-A- 5 293 996
- US-A1- 2003 082 321

## Description

### Technical Field

The present invention relates to an oxygen scavenger, and more particularly to an intelligent oxygen scavenger with oxygen level indication.

### Background Art

It is well known that oxygen is one of the most important substances for the survival of human kind and other animals. Man will die without oxygen. On the other hand, however, oxygen is harmful and causes material damage in many ways, for example, rottenness of food products, oil deterioration of peanuts, meat products and other food products rich with oil, and oxidative deterioration of tea and Camellia sinensis, and vitamin C, etc., all of which are caused by oxygen. Also, rusting of metal products and aging of rubber and plastic products are also results of the oxidation of the oxygen. China and Japan have begun to develop an oxygen scavenger since the 1960s trying to minimize the loss and damage caused by oxygen. The present inventors has been trying to study oxygen scavenger and oxygen removal sealing and packing techniques for keeping freshness of food products since 1963 and has successfully developed several commercially useful products, such as, type-"0" oxygen absorbent, 4H oxygen scavenger□oxygen scavenger for beer, 998 highly-active oxygen scavenger, freshness keeping bottle cap for beer, oxygen scavenger for meat products, oxygen scavenger for Chinese chestnuts, and oxygen absorbent in tablet form, etc. The patents obtained by the present inventors including CN94242444.1, CN97247344.0, CN98227092.5 and CN98227282.0. Nowadays, oxygen removing and freshness keeping techniques and oxygen scavengers have been more and more widely used. Oxygen scavengers have been used in freshness keeping of Chinese traditional medicine such as ginseng root and food products such as rice, tea, tobacco, Chinese moon cake, cookies, fried melon seeds and sunflower seeds, peanuts, Chinese dates, and sausage etc. Oxygen scavengers are also used in sealing up and storage of military products such as components for missiles and gun shells. The oxygen scavengers are able to keep the freshness of the foods by rapidly removing the oxygen in the air-tight food bags, making the level, i.e. concentration, of oxygen inside the bags to drop from 21% to less than0.1%. However, existing oxygen scavengers have the following problems during use: because the level of oxygen in the food bags cannot be observed and identified directly by eyes, foods contained in the bags often get bad and deteriorated because the level of oxygen is too high due to bad quality oxygen scavengers or poor sealing of the bags caused by improper use of the packing material or poor quality of the soldering seams of the bags.

To indicate a correct functioning of an oxygen scavenger, the scavengers can be provided with oxygen level indicators, such as disclosed in JP 62 183 834, which discloses the preamble of claim 1 of the present application.

### Summary of the invention

It is one object of the present invention to provide an intelligent oxygen scavenger with oxygen level indication, which can be used by a manufacture or a user for rapidly see the level of oxygen being removed and the freshness keeping effect of the oxygen scavenger directly.

It is another object of the present invention to provide an intelligent oxygen scavenger with oxygen level indication, by which a user can rapidly identify the oxygen level after the oxygen scavenger has been used. Such oxygen scavenger with oxygen level indication can be easily produced with low production cost.

It is yet another object of the present invention to provide an intelligence oxygen scavenger with oxygen level indication, which can prevent the content of the oxygen scavenger from being escaped from the packing bag with good oxygen removing effects and simplified manufacturing process.

The object of the present invention is achieved through the following technical solutions: an intelligent oxygen scavenger with oxygen level indication according to the present invention, comprising an oxygen scavenger and a packing bag, the oxygen scavenger is contained in the packing bag, wherein the sealing edge of the packing bag is provided with a marker for oxygen level indicator of color changing substance and an observation window is provided in a position corresponding to the oxygen level indicator.

The object and the problems to be solved by the present invention can be further achieved by the following technical solutions:

The intelligent oxygen scavenger with oxygen level indication, wherein said marker for oxygen level indicator is an oxygen indicating layer fixated on the packing bag.

The intelligent oxygen scavenger with oxygen level indication, wherein said marker for oxygen level indicator is an oxygen level indicating line provided between the front film and back film of the packing bag.

The intelligent oxygen scavenger with oxygen level indication, wherein said marker for oxygen level indicator is an oxygen level indicating line attached with color changing substance arrange in the middle of the longitudinal seam of the packing bag.

The intelligent oxygen scavenger with oxygen level indication, wherein said packing bag comprising an inner packing film and an outer packing film, and vent pores arranged in staggered manner are provided on the inner packing film and the outer packing film.

The intelligent oxygen scavenger with oxygen level indication, wherein said observation window is transparent in a shape of continuous lines, dotted lines, round shape or strip like.

The intelligent oxygen scavenger with oxygen level indication, wherein said oxygen indicating layer is a filter paper infused with oxygen level indicator of color changing substance.

The intelligent oxygen scavenger with oxygen level indication, wherein said oxygen indicating layer is non-woven fabrics or adhesive tape adhered with oxygen level indicator of color changing substance.

The intelligent oxygen scavenger with oxygen level indication, wherein said oxygen level indicating line is any of yam, cotton thread, paper twine or synthetic fiber thread adhered with color changing substance oxygen level indicator.

The intelligent oxygen scavenger with oxygen level indication, wherein said inner packing film is CPP or PE film provided with vent pores, said outer packing film is complex film of PET/CPP or PET/PE provided with vent pores.

The intelligent oxygen scavenger with oxygen level indication, wherein said inner packing film is a complex film combing air permeable paper and CPP or PE with vent pores.

The present invention has the following advantages and effects compared with existing techniques: i) Reliability and safety of the fresh products kept by oxygen scavenger are improved by combination of the oxygen scavenger and the oxygen level indicator; ii) The oxygen removal effect of the oxygen scavenger can be easily observed and accurately identified at any time; iii) The user can take his ease during use with the method for accurately identifying the freshness of the foods or products; iv) The manufacture is able to find the quality problem of the packing bags and their sealing conditions in a timely manner so as to improve the quality of their products especially the food products; v) Quality accidents of freshness keeping products and losses caused thereof can be effectively prevented in advance so as to ensure quality control; vi) Continuous production can be achieved; vii) The production cost for the indicator is low by simply fixate the indicator directly to the oxygen scavenger; viii) Excellent oxygen removal effects: the pores provided on the outer packing film and the inner packing film are staggered so that the oxygen scavenger can smoothly absorb oxygen without escaping the packing bag; ix) The manufacture process is simple without need of specially designed packing machine; x) Both the inner packing film made of CPP and PE and the outer packing film made of PET/CPP and CPP or PET/PE are transparent films provided with small pores, and observation windows can be provided. Alternatively, a air permeable opaque paper or complex film of paper and plastic can be put between the inner and outer packing films while making the width of such paper or complex film less than the width of the outer packing film so as to make it possible to reserve observation windows in the longitudinal seam of the oxygen scavenger.

### Brief Description of the drawings

Fig. 1 is a schematic view of the present invention.
Fig. 2 is a sectional view of the first embodiment according to the present invention.
Fig. 3. is a profile view of the second embodiment according to the present invention.
Fig. 4 is a sectional view of the second embodiment according to the present invention.
Fig. 5. is a front view of the third embodiment according to the present invention.
Fig. 6 is a profile view of the third embodiment according to the present invention.

### Best Modes

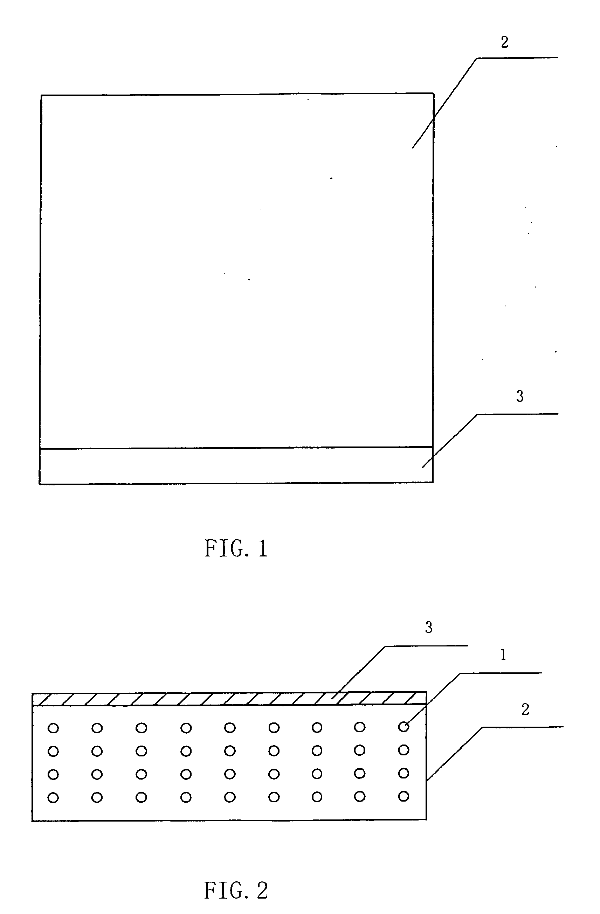

Now refer to FIG. 1 and FIG. 2 showing the first embodiment of the present invention. An intelligent oxygen scavenger with oxygen level indication comprises oxygen scavenger 1, a packing bag 2 and a marker containing oxygen level indicator. Oxygen scavenger 1 is contained inside the packing bag 2. The marker containing oxygen level indicator of color changing substance is an indicating layer 3, which can be formed and fixated to the packing bag 2 through a variety of methods, such as, i) by infusing a oxygen indicator to a filter paper and fixate the filter paper to the packing bag 2 by adhesive tape; ii) by combing a filter paper to PE at first, then infusing the filter paper with oxygen indicator, then putting the carrier (filter paper) between transparent PET metal power/PE film and PE/paper/PE film prepared in advance and bonding them together to form a observation window for oxygen level indication by thermal welding; iii) by attaching a oxygen level indicator to a nonwoven fabric or a filter paper and then fixating it to the packing bag 2 by adhesive tape; iv) by attaching a oxygen level indicator to a yam thread or an adhesive tape to form a oxygen level indicating tape, then fixate the tape to the packing bag 2 by transparent plastic adhesive tape; v) by attaching a oxygen level indicator to a yarn thread, then welding the yarn thread to a specifically designed transparent longitudinal seam of the packing bag; vi) by directly fixate a yam thread attached with indicator to a longitudinal seam of the packing bag by adhesive tape.

The oxygen scavenger is a high-efficiency oxygen scavenger generally comprising strong water absorbent such as reduced iron powder, inorganic salt, activated carbon, salts of polyacrylic acid and water. The oxygen scavenger is sealed in a packing bag made of PET sheet/PE or OPP/paper/PE or complex plastic films of PET/PE and PET/CPP printed with golden or silver metal powder. Small pores are provided on the complex plastic films. Oxygen pass through the pores and goes into the oxygen scavenger to be absorbed. When the oxygen concentration drops to a level less than0.1%, the packed material is in a freshness keeping status. The indicating layer containing oxygen level indicator provided on the packing bag include a oxidation-reduction-color-changing substance and a oxygen level indicator carrier, the color of the oxygen level indicator changes corresponding to the variation of oxygen level inside the sealed packing bag or other sealed container. For example, the color is red when the oxygen level is below0.1%, and the color changes to blue when the oxygen level is over0.1%. The oxygen level indicator carrier can be made of, for example, yam thread, cotton thread, filter paper, nonwoven fabric or plastic film coated with adhesive. The oxygen level indicator can be infused to or directly attached to the carrier which is fixated to the packing bag by the following methods, for example, by attaching the yam thread to the packing bag with transparent plastic adhesive tape, or by putting the yarn thread indicator between a PET/PE or PET/CPP film printed with golden or silver metal powder making the longitudinal seam section of the packing bag transparent, or by fixating the paper, tape, thread as indicator to the longitudinal seam of the packing film of the oxygen scavenger by adhesive tape, or by firstly combing filter paper with PE then infusing the filter paper with oxygen level indicator to form a indicator carrier and finally putting the carrier between golden metal powder printed PET/PE and PE/paper/PE with transparent windows to form a oxygen level observation window. When things to be kept fresh use oxygen scavenger with oxygen level indicator according to the present embodiment, the manufacturer and the user is able to directly see the oxygen level inside the container to rapidly identify the freshness keeping effects therefore reliability and security of the oxygen scavenger are improved.

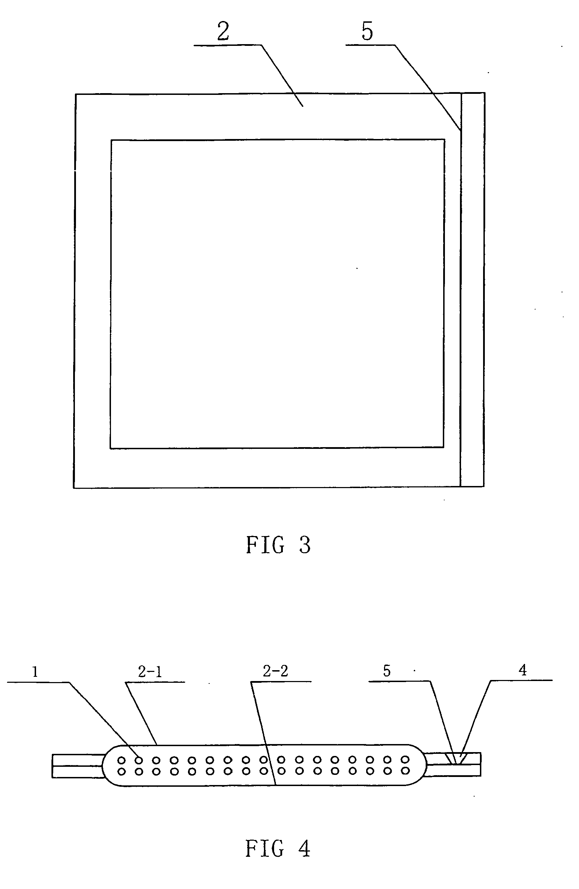

Now refer to FIG. 3 and FIG 4 showing the second embodiment of the present invention. An oxygen scavenger with oxygen level indication comprises oxygen scavenger 1, a packing bag 2 and a marker containing oxygen level indicator. Oxygen scavenger 1 is contained inside the packing bag 2. The mark for the oxygen level indicator is an indicating line 5. The packing bag 2 is made by thermal sealing of front film 2-1 and back film 2-2. The indicating line 5 made of cotton thread is provided in the middle of the longitudinal sealing edge of the front film 2-1 and the back film 2-2. A thread like or dotted thread like observation window 4 is provided on the sealing edge of the front film 2-1 corresponding to the indicating line 5.

The oxygen scavenger is a high-efficiency oxygen scavenger generally comprising strong water absorbent such as reduced iron powder, inorganic salt, activated carbon, salts of polyacrylic acid and water. The oxygen scavenger is sealed in a packing bag composed of front film and back film. The front film is made of complex double layer transparent plastic film of PET/PE or PET/CPP or OPP/CPP or OPP/PE. The back film is made by a complex of CPP/paper/PE/PET. Small pores are provided on the back film. The front film can also be provided pores when necessary. Oxygen pass through the pores and goes into the oxygen scavenger to be absorbed. When the oxygen concentration drops to a level less than 0.1 %, the packed material is in a freshness keeping status. The indicating line containing oxygen level indicator provided on the packing bag include a oxidation-reduction-color-changing substance and a oxygen level indicator carrier, the color of the oxygen level indicator changes corresponding to the variation of oxygen level inside the sealed packing bag or other sealed container. For example, the color is red when the oxygen level is below 0.1%, and the color changes to blue when the oxygen level is over 0.1 %. The oxygen level indicating line can be made of, for example, yarn thread, cotton thread or synthetic threads. The oxygen level indicating line is fixated to the packing bag, i.e. the sealing edge between the front and back film, by thermal sealing. When things to be kept fresh use oxygen scavenger with oxygen level indicator according to the present embodiment, the manufacturer and the user is able to directly observe the oxygen level inside the container to identify the freshness keeping effects therefore reliability and security of the oxygen scavenger are improved.

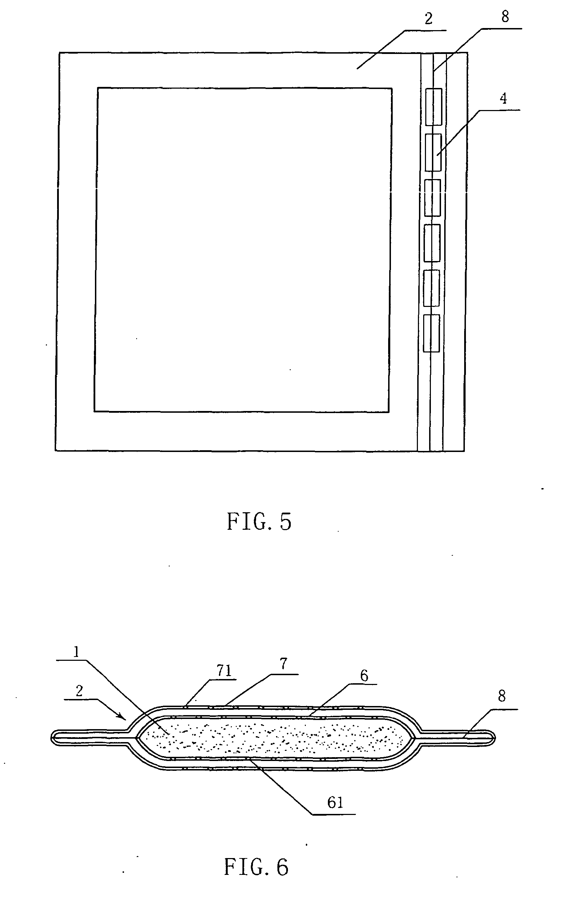

Now refer to FIG. 5 and FIG. 6 showing the third embodiment of the present invention. An oxygen scavenger with oxygen level indication comprises oxygen scavenger 1 and a packing bag 2. An indicating line 8 is provided between the longitudinal seams of the packing bag 2. Observation windows 4 are provided on the longitudinal seam corresponding to the location of the oxygen level indicating line 8. The packing bag 2 includes an inner packing film 6 and an outer packing film 7, in which pores 71 of the outer packing film 7 and pores 61 of the inner packing film are arranged in a staggered manner. The oxygen level indicating line 8 is a synthetic thread or cotton thread attached with oxygen level indicator. The oxygen level indicating line 8 is fixated in the longitudinal seam of the packing bag 2. The observation windows 4 of the indicating line are continuous and transparent with round shape, strip shape or rectangular shape. The color of the oxygen level indicating line can be observed through observation window 4. The outer packing film 7 is golden or silver metal powder printed PET/CPP, PET/PE, and the inner packing film 6 is CPP or PE.

Refer to FIG. 6, an oxygen scavenger with oxygen level indication comprises oxygen scavenger 1 and a packing bag 2. An indicating line 8 is provided between the longitudinal seams of the packing bag 2. Observation windows 4 are provided on the longitudinal seam corresponding to the location of the oxygen level indicating line 8. The packing bag 2 includes an inner packing film 6 and an outer packing film 7, in which pores 71 of the outer packing film 7 and pores 61 of the inner packing film are arranged in a staggered manner. The oxygen level indicating line 8 is a synthetic thread attached with oxygen level indicator. The oxygen level indicating line 8 is fixated in the longitudinal seam of the packing bag 2. The observation windows 4 of the indicating line are continuous and transparent with strip like rectangle shape round shape. The color of the oxygen level indicating line can be directly seen through observation window 4. The outer packing film 7 is PET/PE or PET/CPP printed with golden or silver metal powder, and the inner packing film 6 is PE air permeable paper of complex film of such air permeable and air permeable PP, etc.

## Claims

1. An intelligent oxygen scavenger with oxygen level indication, comprising an oxygen scavenger (1) and a packing bag (2), the oxygen scavenger (1) is contained in the packing bag (2), **characterized in that** the sealing edge of the packing bag (2) is provided with a marker for oxygen level indicator of color changing substance and an observation window (4) is provided in a position corresponding to the oxygen level indicator.

2. The intelligent oxygen scavenger with oxygen level indication according to claim 1, **characterized in that** said marker for oxygen level indicator is an oxygen indicating layer (3) fixated on the packing bag (2).

3. The intelligent oxygen scavenger with oxygen level indication according to claim 1, **characterized in that** said marker for oxygen level indicator is an oxygen level indicating line (5) provided between the front film (2-1) and back film (2-2) of the packing bag (2).

4. The intelligent oxygen scavenger with oxygen level indication according to claim 1, **characterized in that** said marker for oxygen level indicator is an oxygen level indicating line (5) attached with color changing substance arranged in the middle of the longitudinal seam of the packing bag (2).

5. The intelligent oxygen scavenger with oxygen level indication according to claim 1, **characterized in that** said packing bag (2) comprising an inner packing film (6) and an outer packing film (7), and vent pores (61, 71) arranged in staggered manner are provided on the inner packing film (6) and the outer packing film (7).

6. The intelligent oxygen scavenger with oxygen level indication according to claim 1, **characterized in that** said observation window (4) is transparent in a shape of continuous lines, dotted lines, round shape or strip like.

7. The intelligent oxygen scavenger with oxygen level indication according to claim 2, **characterized in that** said oxygen indicating layer (3) is a filter paper infused with oxygen level indicator of color changing substance.

8. The intelligent oxygen scavenger with oxygen level indication according to claim 2, **characterized in that** said oxygen indicating layer (3) is non-woven fabrics or adhesive tape adhered with oxygen level indicator of color changing substance.

9. The intelligent oxygen scavenger with oxygen level indication according to claim 3 or 4, **characterized in that** said oxygen level indicating line (5) is any of yam, cotton thread, paper twine or synthetic fiber thread adhered with oxygen level indicator of color changing substance.

10. The intelligent oxygen scavenger with oxygen level indication according to claim 5, **characterized in that** said inner packing film (6) is CPP or PE film provided with vent pores, said outer packing film (7) is complex film ofPET/CPP or PET/PE provided with vent pores.

11. The intelligent oxygen scavenger with oxygen level indication according to claim 5, **characterized in that** said inner packing film (6) is a air permeable paper or a complex film combing the air permeable paper and CPP or PE with vent pores.

## Patentansprüche

1. Intelligenter Sauerstoffbearbeiter mit Sauerstoffkonzentrationsanzeige bestehend aus einem Sauerstoffreiniger (1) und einem Behältnis (2), wobei der Sauerstoffreiniger sich im Behältnis (2) befindet, **dadurch gekennzeichnet, dass** die Dichtkante des Behältnisses (2) eine Sauerstoffkonzentrationsanzeige mit farbverändernder Substanz und ein Beobachtungsfenster (4) in einer Position aufweist, welche mit der Sauerstoffkonzentrationsanzeige korrespondiert.

2. Intelligenter Sauerstoffbearbeiter mit Sauerstoffkonzentrationsanzeige nach Anspruch 1, **dadurch gekennzeichnet, dass** die Sauerstoffkonzentrationsanzeige in Form einer Sauerstoffanzeigeschicht (3) mit dem Behältnis (2) fest verbunden ist.

3. Intelligenter Sauerstoffbearbeiter mit Sauerstoffkonzentrationsanzeige nach Anspruch 1, **dadurch gekennzeichnet, dass** die Sauerstoffkonzentrationsanzeige eine Sauerstoffanzeigelinie (5) aufweist, welche sich zwischen einem Frontbelag (2-1) und einem Rückbelag (2-2) des Behältnisses (2) befindet.

4. Intelligenter Sauerstoffbearbeiter mit Sauerstoffkonzentrationsanzeige nach Anspruch 1, **dadurch gekennzeichnet, dass** die Sauerstoffanzeigelinie (5) eine Farbe verändernde Substanz aufweist, wobei sie mittig der Längsnaht des Behältnisses (2) angebracht ist.

5. Intelligenter Sauerstoffbearbeiter mit Sauerstoffkonzentrationsanzeige nach Anspruch 1, **dadurch gekennzeichnet, dass** das Behältnis (2) aus einer inneren Filmschicht (6) und einer äusseren Filmschicht (7) besteht und auf diesen gestaffelt vorhandene luftdurchlässige Poren (61, 71) aufweist.

6. Intelligenter Sauerstoffbearbeiter mit Sauerstoffkonzentrationsanzeige nach Anspruch 1, **dadurch gekennzeichnet, dass** das transparente Beobachtungsfenster (4) in Form von durchgehenden Linien, gepunkteten Linien, rund- oder bandförmig ist.

7. Intelligenter Sauerstoffbearbeiter mit Sauerstoffkonzentrationsanzeige nach Anspruch 2, **dadurch gekennzeichnet, dass** die Sauerstoffanzeigeschicht (3) aus einem Filterpapier besteht, welches eine farbverändernde Substanz zur Sauerstoffanzeige aufweist.

8. Intelligenter Sauerstoffbearbeiter mit Sauerstoffkonzentrationsanzeige nach Anspruch 2, **dadurch gekennzeichnet, dass** die Sauerstoffanzeigelage (3) aus nicht gewebten Textilien oder einem Klebestreifen mit einer Sauerstoffkonzentration durch Farbveränderung anzeigenden Substanz besteht.

9. Intelligenter Sauerstoffbearbeiter mit Sauerstoffkonzentrationsanzeige nach Anspruch 3 oder 4, **dadurch gekennzeichnet, dass** die Sauerstoffanzeigelinie (5) aus Garn, Baumwollfaden, Zellulosezwirn oder synthetischer Faser besteht, welche eine Sauerstoffkonzentration durch Farbveränderung anzeigenden Substanz aufweist.

10. Intelligenter Sauerstoffbearbeiter mit Sauerstoffkonzentrationsanzeige nach Anspruch 5, **dadurch gekennzeichnet, dass** die innere Filmschicht (6) aus CPP oder PE -Folie besteht, welche über luftdurchlässige Mikroporen verfügt und die äussere Filmschicht (7) aus einer Komplexverbindung aus PET/CPP oder PET/PE besteht, welche über luftdurchlässige Poren verfügt.

11. Intelligenter Sauerstoffbearbeiter mit Sauerstoffkonzentrationsanzeige nach Anspruch 5, **dadurch gekennzeichnet, dass** die innere Filmschicht (6) aus luftdurchlässiger Zellulose oder einer Verbindung aus luftdurchlässiger Zellulose und CPP oder PE mit luftdurchlässigen Poren besteht.

## Revendications

1. Absorbeur d'oxygène intelligent avec indicateur de niveau d'oxygène, comprenant un absorbeur d'oxygène (1) et un sachet d'emballage (2), l'absorbeur d'oxygène (1) étant contenu dans le sachet d'emballage (2), **caractérisé par le fait que** le bord de soudure du sachet d'emballage (2) est muni d'un repère pour l'indicateur de niveau d'oxygène consistant en une substance changeant de couleur et qu'une fenêtre d'observation (4) est prévue dans une position correspondant à l'indicateur de niveau d'oxygène.

2. Absorbeur d'oxygène intelligent avec indicateur de niveau d'oxygène selon la revendication 1, **caractérisé par le fait que** ledit repère pour l'indicateur de niveau d'oxygène est une couche indiquant de l'oxygène (3) fixée sur le sachet d'emballage (2).

3. Absorbeur d'oxygène intelligent avec indicateur de niveau d'oxygène selon la revendication 1, **caractérisé par le fait que** ledit repère pour l'indicateur de niveau d'oxygène est un trait indiquant le niveau d'oxygène (5) prévu entre le film avant (2-1) et le film arrière (2-2) du sachet d'emballage (2).

4. Absorbeur d'oxygène intelligent avec indicateur de niveau d'oxygène selon la revendication 1, **caractérisé par le fait que** ledit repère pour l'indicateur de niveau d'oxygène est un trait indiquant le niveau d'oxygène (5) fixé avec la substance changeant de couleur disposée au centre du cordon de soudure longitudinal du sachet d'emballage (2).

5. Absorbeur d'oxygène intelligent avec indicateur de niveau d'oxygène selon la revendication 1, **caractérisé par le fait que** ledit sachet d'emballage (2) comprend un film d'emballage intérieur (6) et un film d'emballage extérieur (7), et que des orifices d'aération (61, 71) disposés en quinconce sont prévus dans le film d'emballage intérieur (6) et le film d'emballage extérieur (7).

6. Absorbeur d'oxygène intelligent avec indicateur de niveau d'oxygène selon la revendication 1, **caractérisé par le fait que** ladite fenêtre d'observation (4) est transparente, en forme de traits pleins, de traits pointillés, de forme ronde ou en forme de bande.

7. Absorbeur d'oxygène intelligent avec indicateur de niveau d'oxygène selon la revendication 1, **caractérisé par le fait que** ladite couche indiquant de l'oxygène (3) est un filtre en papier imbibé d'indicateur de niveau d'oxygène consistant en une substance changeant de couleur.

8. Absorbeur d'oxygène intelligent avec indicateur de niveau d'oxygène selon la revendication 2, **caractérisé par le fait que** ladite couche indiquant de l'oxygène (3) est un tissu nion-tissé ou une bande adhésive avec, y adhéré, de l'indicateur de niveau d'oxygène consistant en une substance changeant de couleur.

9. Absorbeur d'oxygène intelligent avec indicateur de niveau d'oxygène selon la revendication 3 ou 4, **caractérisé par le fait que** ledit trait indiquant le niveau d'oxygène (5) est l'un ou l'autre parmi un fil, un fil de coton, un fil de papier ou une fibre synthétique avec, y adhéré, de l'indicateur de niveau d'oxygène consistant en une substance changeant de couleur.

10. Absorbeur d'oxygène intelligent avec indicateur de niveau d'oxygène selon la revendication 5, **caractérisé par le fait que** ledit film d'emballage intérieur (6) est un film de CPP ou de PE pourvu d'orifices d'aération, que ledit film d'emballage extérieur (7) est un film complexe de PET/CPP ou PET/PE pourvu d'orifices d'aération.

11. Absorbeur d'oxygène intelligent avec indicateur de niveau d'oxygène selon la revendication 5, **caractérisé par le fait que** ledit film d'emballage intérieur (6) est un papier perméable à l'air ou un film complexe combinant le papier perméable à l'air et du CPP ou PE avec des orifices d'aération.
